(19) **Europäisches Patentamt / European Patent Office / Office européen des brevets**

(11) **EP 4 583 180 A1**

(12) **EUROPEAN PATENT APPLICATION**
published in accordance with Art. 153(4) EPC

(43) Date of publication:
**09.07.2025 Bulletin 2025/28**

(21) Application number: **23859872.6**

(22) Date of filing: **18.07.2023**

(51) International Patent Classification (IPC):
$H01M\ 4/13$ [(2010.01)]    $H01M\ 4/139$ [(2010.01)]
$H01M\ 4/48$ [(2010.01)]    $H01M\ 4/62$ [(2006.01)]
$H01M\ 10/052$ [(2010.01)]    $H01M\ 10/0562$ [(2010.01)]
$H01M\ 10/058$ [(2010.01)]

(52) Cooperative Patent Classification (CPC):
H01M 4/13; H01M 4/139; H01M 4/48; H01M 4/62;
H01M 10/052; H01M 10/0562; H01M 10/058;
Y02E 60/10

(86) International application number:
**PCT/JP2023/026326**

(87) International publication number:
**WO 2024/048102 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **31.08.2022 JP 2022138484**

(71) Applicant: **Panasonic Intellectual Property
Management Co., Ltd.
Kadoma-shi, Osaka 571-0057 (JP)**

(72) Inventors:
• **MATSUBARA, Kenji
  Kadoma-shi, Osaka 571-0057 (JP)**
• **TAKEZAWA, Hideharu
  Kadoma-shi, Osaka 571-0057 (JP)**

(74) Representative: **Novagraaf International SA
Chemin de l'Echo 3
1213 Onex, Geneva (CH)**

(54) **ELECTRODE, BATTERY USING SAME, AND METHOD FOR PRODUCING ELECTRODE**

(57)    An electrode 10 of the present disclosure includes an electrode active material and a solid electrolyte in contact with the electrode active material, the electrode active material includes an oxide containing titanium and containing no lithium, and the oxide exists in a state of particles having a median diameter of more than 2 $\mu$m and less than 7 $\mu$m. A battery 100 of the present disclosure includes a positive electrode 20, a negative electrode 30, and an electrolyte layer 40 placed between the positive electrode 20 and the negative electrode 30, and the positive electrode 20 or the negative electrode 30 includes the electrode 10 of the present disclosure.

FIG. 1

EP 4 583 180 A1

**Description**

TECHNICAL FIELD

The present disclosure relates to an electrode, a battery using the same, and a method for producing an electrode.

BACKGROUND ART

Research and development of solid-state batteries as next-generation batteries is being actively conducted. One of the issues with solid-state batteries is that electrodes thereof have high resistance and thus the battery capacity cannot be fully utilized. Therefore, there is a need to reduce electrode resistance. In order to reduce electrode resistance, it is important to form a good interface between a solid electrolyte and an electrode active material. For example, a sintered body of the solid electrolyte and the electrode active material is likely to form a good interface between the solid electrolyte and the electrode active material, and thus is suitable for an electrode of a solid-state battery.

Patent Literature 1 discloses that, by making the ratio of the average particle diameter of an electrode active material to the average particle diameter of a solid electrolyte material to be 12 times to 79 times, an electrode sintered body containing the solid electrolyte material and the electrode active material at high densities can be obtained.

CITATION LIST

Patent Literature

Patent Literature 1: JP 2013-218838 A1

SUMMARY OF INVENTION

Technical Problem

In the conventional art, it is desired to improve the sinterability of an electrode and reduce the resistance of the electrode.

Solution to Problem

The present disclosure provides an electrode including:

an electrode active material; and
a solid electrolyte in contact with the electrode active material, wherein
the electrode active material includes an oxide containing titanium and containing no lithium, and
the oxide exists in a state of particles having a median diameter of more than 2 $\mu$m and less than 7 $\mu$m.

Advantageous Effects of Invention

According to the present disclosure, it is possible to improve the sinterability of an electrode and reduce the resistance of the electrode.

BRIEF DESCRIPTION OF THE DRAWINGS

FIG. 1 is a cross-sectional view showing a schematic configuration of an electrode according to a first embodiment.
FIG. 2 is a process diagram illustrating a method for producing the electrode.
FIG. 3 is a cross-sectional view showing a schematic configuration of a battery according to a second embodiment.
FIG. 4 is a process diagram illustrating a method for producing the battery.
FIG. 5 is a graph showing the charge/discharge curve for the first cycle of a half cell in which an electrode of Example 1 is used.
FIG. 6 is a graph showing the particle size distribution of particles of $TiO_2$.
FIG. 7A is an SEM image (3000 times) of a cross-section of the electrode of Example 1.

FIG. 7B is an SEM image (10000 times) of the cross-section of the electrode of Example 1.
FIG. 8 is an SEM image (10000 times) of a cross-section of an electrode of Example 2.
FIG. 9A is an SEM image (3000 times) of a cross-section of an electrode of Comparative Example 2.
FIG. 9B is an SEM image (10000 times) of the cross-section of the electrode of Comparative Example 2.
FIG. 10 is an SEM image (10000 times) of a cross-section of an electrode of Comparative Example 4.
FIG. 11A is an SEM image (3000 times) of a cross-section of an electrode of Example 3.
FIG. 11B is an SEM image (10000 times) of the cross-section of the electrode of Example 3.

DESCRIPTION OF EMBODIMENTS

(Findings on which the present disclosure is based)

The present inventors have examined the use of an oxide containing titanium as an electrode active material to produce an electrode. The oxide containing titanium is considered to be promising as an electrode active material for solid-state batteries since the oxide has the advantages of being able to be mass-produced inexpensively, having excellent charge/discharge characteristics, and having high safety.

As the oxide containing titanium, oxides that are used in pigments, cosmetics, catalysts, etc., have been known. The oxides for these applications usually have a particle shape of a nano-order size. However, according to the examination by the present inventors, the nanoparticles of the oxide containing titanium tend to exist in the gaps between the particles of a solid electrolyte at the stage of forming an electrode material. In this case, the total contact area between the nanoparticles of the oxide and the particles of the solid electrolyte becomes large. Therefore, the nanoparticles of the oxide become a factor that inhibits sintering between the particles of the solid electrolyte, and deteriorate the sinterability of an electrode, which in turn decreases the ionic conductivity in the electrode. In addition, the nanoparticles of the oxide also tend to exist in the gaps between the particles of a conductive agent and become a factor that obstructs an electron path, which therefore decreases the electrical conductivity in the electrode. That is, the nanoparticles of the oxide are not necessarily suitable for producing an electrode having practical electrical conductivity and practical ionic conductivity. Therefore, there is a need for a technique to, when using the oxide containing titanium as an electrode active material, improve the sinterability of an electrode while suppressing inhibition of sintering between the particles of a solid electrolyte and inhibition of formation of an electron path between the particles of a conductive agent.

Hereinafter, embodiments of the present disclosure will be described with reference to the drawings. The present disclosure is not limited to the embodiments described below.

(First embodiment)

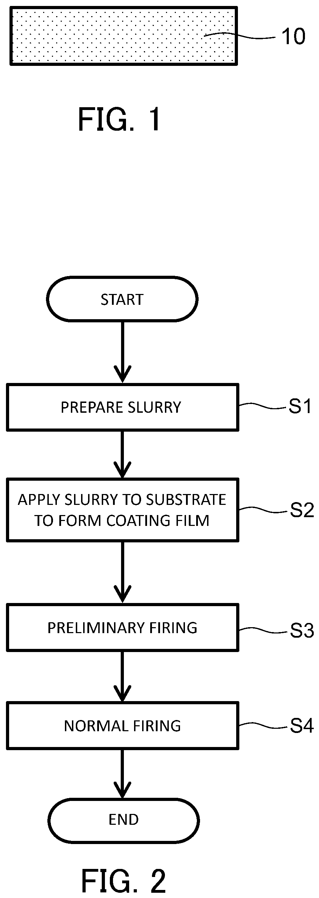

FIG. 1 is a cross-sectional view showing a schematic configuration of an electrode 10 according to a first embodiment. The electrode 10 includes an electrode active material and a solid electrolyte. The electrode 10 is an electrode produced by firing a molded body of a powder material including powder of the electrode active material and powder of the solid electrolyte. The electrode 10 is used, for example, as a positive electrode or a negative electrode of a solid-state battery.

In the present description, "sintering" refers to a phenomenon in which bonding occurs between particles when the molded body of the powder material is heated, and the molded body becomes densified along with volume shrinkage. "Firing" refers to heat treatment for sintering.

The electrode active material is a material having the ability to occlude and release metal ions such as lithium ions. In the present embodiment, the electrode active material includes an oxide containing titanium and containing no lithium. In the electrode 10, the oxide as the electrode active material exists in a state of particles having a median diameter of more than 2 $\mu$m and less than 7 $\mu$m. The particles of the oxide are connected by a sintered phase of the solid electrolyte. The median diameter of the particles of the oxide may be more than 3 $\mu$m and less than 7 $\mu$m, or may be more than 3.4 $\mu$m and less than 6 $\mu$m.

The electrode 10 has oxide particles of a micrometer order size as the electrode active material. The oxide particles of such a size can exist between the particles of the solid electrolyte when the powder material is molded, but the total contact area between the particles of the oxide and the particles of the solid electrolyte can be reduced compared to the case where oxide particles of a nanometer order size are used. Therefore, the oxide particles of a micrometer order size can reduce the influence as a sintering inhibitor and can improve the sinterability of the electrode 10. That is, it becomes possible to form a good contact interface between the oxide and the solid electrolyte. Accordingly, the resistance of the electrode 10 is reduced. Whether or not the sinterability of the electrode 10 is good can be determined, for example, by the porosity of the electrode 10.

The median diameter of the particles of the oxide as the electrode active material can be a value calculated from an electron microscope image of a cross-section of the electrode 10. Specifically, the cross-section of the electrode 10 is observed using a scanning electron microscope. The magnification is, for example, 3000 times. Using image analysis software, the Feret diameters of the particles of the oxide existing in two different observation visual fields are measured. The "Feret diameter" is the length of a perpendicular line formed by sandwiching the particle between two parallel lines in a fixed direction. The number of particles to be measured is, for example, 185 or more. That is, the size of each observation visual field is adjusted such that 185 or more particles are included in the two different observation visual fields. If there are coarse particles formed by aggregation of secondary particles, it is difficult to say that such coarse particles accurately represent the structure of the electrode 10. Therefore, such coarse particles are excluded from the measurement target. The coarse particles are particles having a Feret diameter of 16.5 $\mu$m or more, for example. Next, the volume of each particle is calculated by assuming that the particle is a sphere having the measured Feret diameter. A particle size distribution is created by taking a particle diameter (= Feret diameter, in increments of 0.1 $\mu$m) on the horizontal axis and taking the volume of the particles having that particle diameter relative to the entire volume on the vertical axis. The particle diameter at which the cumulative volume in this particle size distribution is 50% is regarded as the median diameter of the particles of the oxide included in the electrode 10.

The above median diameter may be the median diameter of secondary particles. The secondary particles may be produced by granulating primary particles of a nanometer order size. In addition, it is possible to produce primary particles of micrometer order by hydrothermal synthesis.

Examples of the oxide containing titanium include titanium(IV) oxide and composite oxides containing titanium and transition metals other than titanium. These materials have the ability to occlude and release metal ions such as lithium ions and thus are suitable for the electrode 10 of the present embodiment.

It is desirable that the oxide as the electrode active material is capable of being co-sintered with the solid electrolyte. Specifically, it is desirable that the oxide is not easily reactive with the solid electrolyte and that the crystal structure of the oxide is maintained even after sintering. For example, titanium(IV) oxide is not easily reactive with a NASICON-type oxide solid electrolyte, which is a typical oxide solid electrolyte, and thus is suitable for the electrode 10 of the present embodiment.

Examples of titanium(IV) oxide include anatase-type (tetragonal) titanium oxide, rutile-type (tetragonal) titanium oxide, and brookite-type (orthorhombic) titanium oxide.

The titanium oxide may include anatase-type titanium oxide. The main component of the titanium oxide may be the anatase-type titanium oxide. The anatase-type titanium oxide is suitable as an active material for lithium-ion secondary batteries, for example. In addition, the sinterability of the electrode 10 is improved by using the anatase-type titanium oxide. The "main component" means a component contained in the largest amount by mass ratio. 90 mass% or more of the titanium oxide may be anatase-type titanium oxide. The titanium oxide may substantially include only anatase-type titanium oxide.

The structure of the titanium oxide can be examined by X-ray diffraction measurement or Raman spectroscopy. The ratio of the components contained in the titanium oxide can be confirmed by analyzing the results of X-ray diffraction measurement using the Rietveld method.

An example of a composite oxide suitable as the electrode active material is a composite oxide containing titanium and niobium. The composite oxide containing titanium and niobium also has the ability to occlude and release metal ions such as lithium ions, and thus is suitable for the electrode 10 of the present embodiment. The composite oxide containing titanium and niobium has a composition of $TiNb_2O_7$, for example.

The particles of the oxide as the electrode active material may include secondary particles. The secondary particles each have a plurality of voids therein. When the particles of the oxide as the electrode active material occlude metal ions such as lithium ions, the voids absorb volume changes of the particles. As a result, even when a battery is repeatedly charged and discharged, good contact is maintained between the electrode active material and the solid electrolyte. In addition, an example of a cause of degradation of a sintered-type oxide all-solid-state battery is that cracks occur in an electrode during charge and discharge, which deteriorates the contact between an active material and a solid electrolyte. If secondary particles are used as the active material, it is possible to reduce such degradation.

The solid electrolyte can be an electrolyte suitable for forming the electrode 10. Examples of such an electrolyte include oxide solid electrolytes. Examples of oxide solid electrolytes include solid electrolytes having a NASICON-type structure, solid electrolytes having a perovskite-type structure, solid electrolytes having a LISICON-type structure, solid electrolytes having a garnet-type structure, etc. Among these, a lithium-containing phosphoric acid compound having a NASICON-type structure is suitable for the electrode 10.

NASICON-type solid electrolytes are materials that are capable of being sintered at low temperatures, compared to other oxide solid electrolytes such as solid electrolytes having a perovskite-type structure and solid electrolytes having a garnet-type structure. Being capable of being sintered at low temperatures means being advantageous for suppressing reactions between the electrode active material and the solid electrolyte. In addition, in the case of being capable of being sintered at low temperatures, it is also possible to avoid transition from the anatase-type titanium oxide to rutile-type titanium oxide.

The lithium-containing phosphoric acid compound may have a composition of $Li_{1+x}Al_xGe_{2-x}(PO_4)_3$ ($0 \leq x \leq 2$).

When a compound having such a composition is used as the solid electrolyte and the oxide containing titanium is used as the electrode active material, the effects due to the configuration of the present embodiment are more sufficiently exhibited. In the present description, the compound having the above composition is sometimes referred to as "LAGP".

Another example of the lithium-containing phosphoric acid compound is $Li_{1+x}Al_xTi_{2-x}(PO_4)_3$ ($0 \leq x \leq 2$). In the present description, this compound is sometimes referred to as "LATP".

LAGP is more suitable for the electrode 10 of the present disclosure. That is, LAGP does not contain Ti, and therefore has a wider potential window on the noble side (negative side) than LATP. In this case, it is possible to select a negative electrode active material having a lower potential. This is advantageous for providing high-voltage and high-capacity batteries. One example of achieving such an effect is a combination of LAGP and titanium(IV) oxide. In addition, LAGP is an electrolyte that is capable of being sintered at lower temperatures than LATP. Being capable of being sintered at lower temperatures means being advantageous for suppressing reactions between the electrode active material and the solid electrolyte.

In the electrode 10, the solid electrolyte has a network-like sintered phase. For example, in a cross-section of the electrode 10, the length of the interface in a portion where the particles of the electrode active material and the sintered phase of the solid electrolyte are in contact with each other without any gaps is in the micrometer order, and the sintered phase of the solid electrolyte forms a good interface with the particles of the electrode active material. The existence of such a contact interface contributes to reducing the resistance of the electrode 10.

The sintered phase of the solid electrolyte can be a phase in which the particles of the solid electrolyte are combined and the grain boundaries therebetween are lost. The sintered phase having no grain boundaries can exhibit excellent ionic conductance and can form a good contact interface with the particles of the electrode active material. Such a structure can be formed by using an amorphous solid electrolyte as the raw material for the electrode 10. For example, the structure of the sintered phase can be confirmed by observing a cross-section of the electrode 10 at a magnification of 10000 times using a scanning electron microscope.

In the electrode 10, the sintered phase of the solid electrolyte includes a crystalline phase and an amorphous phase. In the case where the sintered phase of the solid electrolyte includes a crystalline phase, the electrode 10 exhibits higher ionic conductivity, so that such a sintered phase is desirable. As described later, the crystalline phase can be formed by appropriately adjusting the firing temperature. For example, if firing is performed at a temperature equal to or higher than the crystallization temperature of the solid electrolyte, the electrode 10 including a crystalline solid electrolyte is obtained. However, an amorphous phase may be included in the solid electrolyte. In the case where an amorphous phase is included, the flexibility of the solid electrolyte is increased, so that volume changes due to expansion and contraction of the electrode active material are easily absorbed by the solid electrolyte.

The crystallinity of the solid electrolyte can be examined by X-ray diffraction measurement or a differential scanning calorimeter (DSC). In the case of using X-ray diffraction measurement, if only a halo pattern is observed in an X-ray diffraction pattern of the solid electrolyte, it can be determined that the solid electrolyte is amorphous.

The electrode 10 may further include a conductive agent. Examples of the conductive agent include carbon materials such as graphite, carbon black, carbon fibers, and carbon nanotubes. The graphite may be natural graphite, or may be artificial graphite. Examples of the carbon black include acetylene black, Ketjen black, etc. The carbon material may be crystalline, or may be amorphous. The conductive agent typically has a particle shape in the nanometer or micrometer order. Examples of the particle shape include a spherical shape, an ellipsoid shape, a flake shape, a fiber shape, etc.

The porosity of the electrode 10 is, for example, 30% or less. The lower limit of the porosity is not limited in particular, and is 5%, for example. The porosity can be calculated from the true density of each material included in the electrode 10, the content ratio of each material, the mass of the electrode 10, and the dimensions of the electrode 10.

The content ratio of the electrode active material in the electrode 10 is, for example, 15 mass% or more and 60 mass% or less. The content ratio of the solid electrolyte in the electrode 10 is, for example, 30 mass% or more and 80 mass% or less. The content ratio of the conductive agent in the electrode 10 is, for example, 0.1 mass% or more and 10 mass% or less.

Next, a method for producing the electrode 10 will be described. FIG. 2 is a process diagram illustrating the method for producing the electrode 10. In the present embodiment, the electrode 10 is produced by firing a molded body of a mixture of the electrode active material and the solid electrolyte.

In step S1, a slurry is prepared by mixing raw materials. The raw materials of the slurry are, for example, the electrode active material, the solid electrolyte, the conductive agent, a binder, and a solvent. The slurry may be prepared by mixing the binder and the solvent to prepare a binder solution in advance, and mixing the electrode active material, the solid electrolyte, and the conductive agent into the binder solution.

The particles of the oxide as the electrode active material have a median diameter of more than 3 $\mu$m and less than 10 $\mu$m, for example, as a value measured by a laser diffraction-type particle size distribution measurement device. Due to such a configuration, the sinterability of the electrode 10 can be enhanced. The median diameter measured by the laser diffraction-type particle size distribution measurement device is usually larger than a median diameter obtained from an SEM image of a cross-section.

The electrode active material, the solid electrolyte, and the conductive agent can each be a powder material. The median diameter of the particles of the solid electrolyte is desirably smaller than the median diameter of the particles of the electrode active material. When the electrode active material and the solid electrolyte satisfy such a relationship, the sinterability of the electrode 10 can be enhanced. As a result, the resistance of the electrode 10 can be reduced.

The ratio of the median diameter of the particles of the electrode active material to the median diameter of the particles of the solid electrolyte is, for example, 2 or more and 30 or less. When the electrode active material and the solid electrolyte satisfy such a relationship, the sinterability of the electrode 10 can be enhanced. As a result, the resistance of the electrode 10 can be reduced. The ratio of the median diameter of the particles of the electrode active material to the median diameter of the particles of the solid electrolyte may be 4 or more and 30 or less, or may be 4 or more and 20 or less.

The particles of the oxide as the electrode active material may have a particle diameter (D90) in the range of more than 6 $\mu$m and less than 15 $\mu$m. By using such particles of the oxide, the sinterability of the electrode 10 can be enhanced. As a result, the resistance of the electrode 10 can be reduced. D90 is a particle diameter at which the cumulative volume is 90% in a volume-based particle size distribution, and can be measured using a laser diffraction-type particle size distribution measurement device.

The BET specific surface area of the particles of the oxide as the electrode active material may be 1 $m^2$/g or more and 7 $m^2$/g or less. If the BET specific surface area of the particles of the oxide is appropriately adjusted, side reactions between the particles of the oxide and the particles of the solid electrolyte during firing are suppressed. As a result, the electrode 10 can have high ionic conductivity. If side reactions occur between the particles of the oxide and the particles of the solid electrolyte, an interface resistance layer is formed, so that such side reactions have to be suppressed.

The particles of the oxide as the electrode active material may include primary particles and secondary particles. The ratio (Dp/D50) of the average particle diameter (Dp) of the primary particles to the median diameter (D50) of the particles of the electrode active material is 0.6 or less, for example. The ratio (Dp/D50) is desirably 0.16 or less. By using such particles of the oxide, the sinterability of the electrode 10 can be enhanced. As a result, the resistance of the electrode 10 can be reduced. The lower limit of the ratio (Dp/D50) is not limited in particular, and is 0.05, for example.

The average particle diameter (Dp) of the primary particles of the oxide can be obtained by the following method. The particles of the oxide are observed using a scanning electron microscope (magnification: 30000 times). Fifty primary particles whose outlines can be confirmed in an obtained image are selected. The particle diameter on the long axis side of each selected primary particle is measured. The average value of the particle diameters of the 50 primary particles is calculated. The calculated value is regarded as the average particle diameter (Dp) of the primary particles.

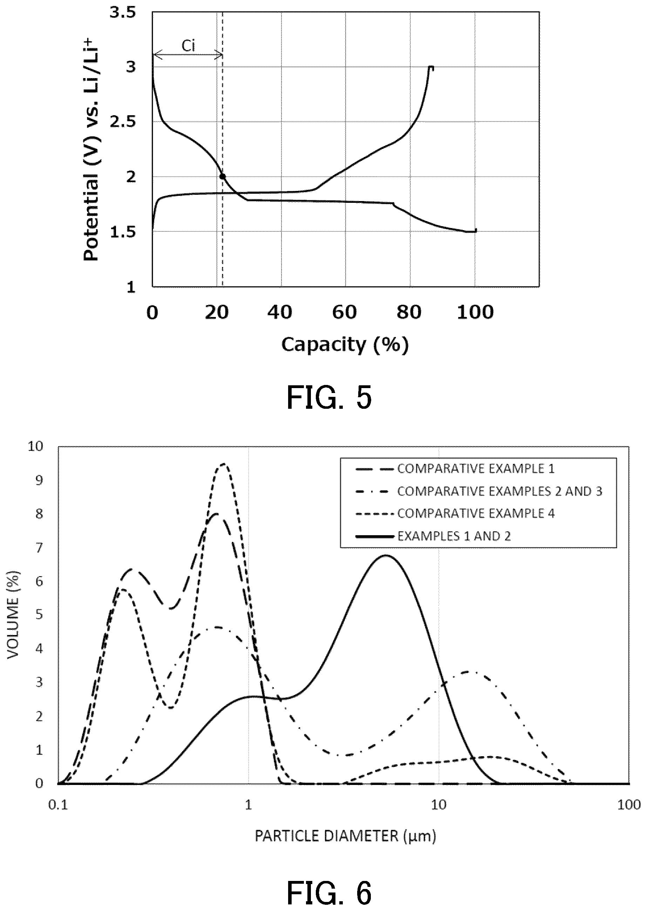

As described later with reference to FIG. 6, the particles of the oxide as the electrode active material may have a bimodal particle size distribution. By using such particles of the oxide, the sinterability of the electrode 10 can be enhanced. As a result, the resistance of the electrode 10 can be reduced.

For example, in the volume-based particle size distribution of the particles of the oxide as the electrode active material, a first peak can exist in the range of 0.5 $\mu$m or more and 2.5 $\mu$m or less, and a second peak can exist in the range of 3 $\mu$m or more and 9 $\mu$m or less. The second peak is larger than the first peak. By using such particles of the oxide, the sinterability of the electrode 10 can be enhanced. As a result, the resistance of the electrode 10 can be reduced.

In a volume-based particle size distribution of the particles of the solid electrolyte, a peak may exist in the range of 0.2 $\mu$m or more and 2 $\mu$m or less. By using such a solid electrolyte, the sinterability of the electrode 10 can be enhanced. As a result, the resistance of the electrode 10 can be reduced.

The particles of the solid electrolyte have, for example, a median diameter of 100 nm or more and 2000 nm or less.

The particles of the solid electrolyte as a raw material can be amorphous. The amorphous solid electrolyte can form a good interface with the particles of the electrode active material at low temperatures by performing preliminary firing in a temperature range that is equal to or higher than the glass transition temperature of the solid electrolyte and equal to or lower than the crystallization temperature of the solid electrolyte. This is because the solid electrolyte has good flexibility in the temperature range that is equal to or higher than the glass transition temperature of the solid electrolyte and equal to or lower than the crystallization temperature of the solid electrolyte. Then, the crystallinity of the solid electrolyte is increased by performing firing in an appropriate temperature range that is equal to or higher than the crystallization temperature of the solid electrolyte and equal to or lower than the melting point of the solid electrolyte, whereby the ionic conductivity of the electrode 10 is improved. In addition, the amorphous solid electrolyte is capable of being sintered at lower temperatures than a crystalline solid electrolyte. Being capable of being sintered at lower temperatures means being advantageous in terms of suppressing reactions between the electrode active material and the solid electrolyte.

The fact that the solid electrolyte is amorphous can be confirmed using a differential scanning calorimeter (DSC). For example, if a degree of crystallization obtained by the DSC is 30% or less, it can be said that the solid electrolyte is amorphous. The degree of crystallization is obtained using the following formula. A measured crystallization heat amount means the amount of heat generated due to crystallization of the solid electrolyte which is a sample to be measured. A fully amorphous crystallization heat amount means the amount of heat generated during crystallization of an amorphous solid electrolyte for which only a halo pattern is observed in an X-ray diffraction pattern.

$$\text{Degree of crystallization (\%)} = 100 \times (Qa - Qs)/Qa$$

Qs: measured crystallization heat amount (J/g)
Qa: fully amorphous crystallization heat amount (J/g)

In the present description, the "median diameter" means a particle diameter at which the cumulative volume in a volume-based particle size distribution is 50%. The volume-based particle size distribution is measured by a laser diffraction-type particle size distribution measurement device at the raw material stage. At the stage of the electrode 10, the volume-based particle size distribution is measured by image analysis of a cross-section.

The binder is decomposed and removed by firing. As the binder, thermoplastic resins such as polyvinyl butyral, polyvinylidene fluoride, cellulose, acrylic, urethane, and polyvinyl alcohol can be used. The solvent is typically an organic solvent such as absolute alcohol (e.g., absolute ethanol), toluene, butyl acetate, and NMP. In addition, the slurry may contain a plasticizer. The type of the plasticizer is not limited in particular, and phthalates such as dioctyl phthalate and diisononyl phthalate can be used.

The conductive agent can be a carbon material. The carbon material may include amorphous carbon. The particles of the carbon material may have a median diameter of 70 nm or less and a BET specific surface area of 60 $m^2$/g or less. By using such a carbon material, the sinterability of the electrode 10 can be enhanced. The lower limit of the median diameter of the particles of the carbon material is not limited in particular, and is 10 nm, for example. The lower limit of the BET specific surface area of the particles of the carbon material is not limited in particular, and is 10 $m^2$/g, for example.

In step S2, the slurry is applied to a substrate to form a coating film. The substrate can be a resin substrate, a glass substrate, a ceramic substrate, or a metal substrate. After the coating film is formed, the solvent is removed from the coating film. Accordingly, a molded body for an electrode is obtained. In order to remove the solvent from the coating film, the coating film may be heated, or the coating film may be naturally dried. If necessary, the coating film may be pressed or heat-pressed. The slurry may be molded and dried without using a substrate.

After the slurry is applied to the substrate to form a coating film, the coating film may be pulverized, and a raw material powder obtained by the pulverization may be pressed or heat-pressed to produce a molded body for an electrode.

In step S3, the molded body for an electrode is preliminarily fired. The preliminary firing is performed, for example, in atmospheric air or in an inert atmosphere. The inert atmosphere is, for example, a nitrogen gas atmosphere or a rare gas atmosphere. It is also possible to mix a small amount of oxygen into the inert atmosphere. The temperature (ambient temperature) of the preliminary firing is, for example, 250°C to 600°C. The firing time of the preliminary firing is, for example, 1 hour to 60 hours.

It is desirable to perform the preliminary firing in a temperature range where the binder is sufficiently removed, the solid electrolyte softens beyond the glass transition temperature thereof, and crystallization of the solid electrolyte does not proceed. By performing such firing, a good interface is formed between the electrode active material and the solid electrolyte due to the removal of the binder.

In step S4, the molded body for an electrode is normally fired. The normal firing is performed, for example, in atmospheric air or in an inert atmosphere. The inert atmosphere is, for example, a nitrogen gas atmosphere or a rare gas atmosphere. It is also possible to mix a small amount of oxygen into the inert atmosphere. The temperature (ambient temperature) of the normal firing is, for example, 550°C to 900°C. The firing time of the normal firing is, for example, 1 hour to 15 hours.

In the normal firing, a sintered phase in which the particles of the solid electrolyte are combined and which has no grain boundaries is formed. It is desirable to perform the normal firing in a temperature range where crystallization of the solid electrolytes appropriately proceeds. The ionic conductivity of the electrode 10 is improved as the crystallinity of the solid electrolyte is improved.

The electrode 10 can be produced through the steps described above.

(Second embodiment)

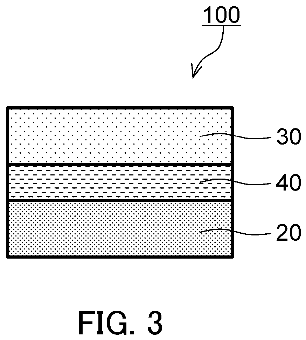

FIG. 3 is a cross-sectional view showing a schematic configuration of a battery 100 according to a second embodiment.

The battery 100 includes a positive electrode 20, a negative electrode 30, and an electrolyte layer 40. The electrolyte layer 40 is placed between the positive electrode 20 and the negative electrode 30. The electrode 10 described in the first embodiment is used as the positive electrode 20 or the negative electrode 30. By using the electrode 10 as the positive electrode 20 or the negative electrode 30, an effect of reducing resistance is obtained in the positive electrode 20 or the negative electrode 30.

The electrode 10 described in the first embodiment is desirably used as the negative electrode 30. In this case, the oxide containing titanium acts as a negative electrode active material. Since the oxide containing titanium is suitable as a negative electrode active material, the electrode 10 is suitable as the negative electrode 30.

In the case where the electrode 10 is used as the negative electrode 30, the oxide containing titanium contains no lithium in a state where the battery 100 has not been charged or discharged after being assembled. That is, the battery 100 is in a state of being fully discharged.

However, it is also possible to use the electrode 10 as a positive electrode. In this case, a material that is less noble than the oxide containing titanium, for example, lithium metal, is used as a negative electrode active material.

The positive electrode 20 includes a positive electrode active material. The positive electrode active material is a material having the ability to occlude and release metal ions such as lithium ions. Examples of the positive electrode active material include lithium-containing transition metal oxides, lithium-containing transition metal phosphates, etc. Among them, lithium-containing transition metal phosphates are suitable for the electrode 10. Examples of lithium-containing transition metal phosphates include lithium iron phosphate, lithium vanadium phosphate, lithium cobalt phosphate, lithium nickel phosphate, etc. In addition to the positive electrode active material, the positive electrode 20 may include a solid electrolyte, a conductive agent, etc.

The electrolyte layer 40 includes a solid electrolyte. The solid electrolyte is, for example, a sulfide solid electrolyte, a halide solid electrolyte, a complex hydride solid electrolyte, a porous oxide solid electrolyte impregnated with an electrolytic solution, or an oxide solid electrolyte. The composition of the solid electrolyte included in the electrolyte layer 40 may be the same as or different from the composition of the solid electrolyte included in the positive electrode 20. The composition of the solid electrolyte included in the electrolyte layer 40 may be the same as or different from the composition of the solid electrolyte included in the negative electrode 30. The positive electrode 20, the electrolyte layer 40, and the negative electrode 30 may include a solid electrolyte having the same composition.

In the battery 100, the positive electrode 20, the negative electrode 30, and the electrolyte layer 40 may be composed of a sintered body. In this case, the positive electrode 20, the negative electrode 30, and the electrolyte layer 40 can be formed integrally by simultaneous firing. When the positive electrode 20, the negative electrode 30, and the electrolyte layer 40 are integrated by simultaneous firing, mutual contact between the positive electrode 20, the negative electrode 30, and the electrolyte layer 40 can be ensured, so that the conductance of metal ions such as lithium ions can be improved.

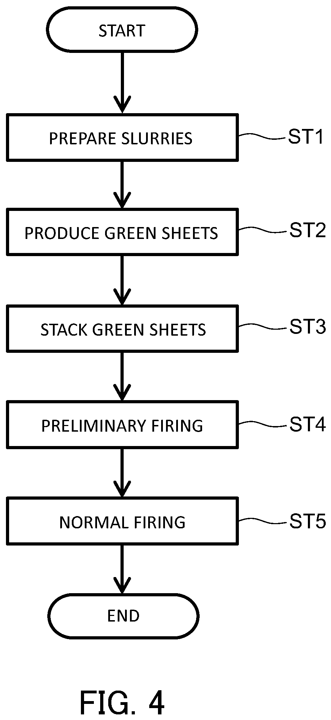

FIG. 4 is a process diagram illustrating a method for producing the battery 100. First, in step ST1, a slurry is prepared. Specifically, a positive electrode slurry, an electrolyte layer slurry, and a negative electrode slurry are prepared. These slurries can be prepared in accordance with the method described in step S1 in FIG. 2. It should be noted that the electrolyte slurry does not contain an electrode active material and a conductive agent.

In step ST2, a green sheet is produced. Specifically, a positive electrode green sheet, an electrolyte layer green sheet, and a negative electrode green sheet are produced using the positive electrode slurry, the electrolyte layer slurry, and the negative electrode slurry, respectively. Each green sheet can be produced by applying the slurry to a substrate to form a coating film, and drying the coating film. Each green sheet is peeled off from the substrate at an appropriate timing.

In step ST3, the green sheets are stacked. Specifically, the positive electrode green sheet, the electrolyte layer green sheet, and the negative electrode green sheet are stacked in this order, and are pressure-bonded by applying pressure thereto. Accordingly, a laminate including the positive electrode green sheet, the electrolyte layer green sheet, and the negative electrode green sheet is obtained.

In step ST4 and step ST5, steps of preliminary firing and normal firing are performed, respectively. The preliminary firing and the normal firing are as described in step S3 and step S4 in FIG. 2. The sintered type battery 100 is obtained through the steps described above.

(Other embodiments)

(Additional notes)

The following techniques are disclosed by the description of the above embodiments.

(Technique 1)

An electrode including:

an electrode active material; and
a solid electrolyte in contact with the electrode active material, wherein
the electrode active material includes an oxide containing titanium and containing no lithium, and
the oxide exists in a state of particles having a median diameter of more than 2 μm and less than 7 μm.

Due to this configuration, a good contact interface is formed between the electrode active material and the solid electrolyte. Therefore, the sinterability of the electrode is improved.

(Technique 2)

The electrode according to Technique 1, wherein the oxide includes at least one selected from the group consisting of titanium oxide and a composite oxide containing titanium and niobium. The titanium oxide has the ability to occlude and release metal ions such as lithium ions, and thus is suitable for the electrode of the present disclosure. The composite oxide containing titanium and niobium also has the same ability, and thus is suitable for the electrode of the present disclosure.

(Technique 3)

The electrode according to Technique 1 or 2, wherein the solid electrolyte has a composition of $Li_{1+x}Al_xGe_{2-x}$ $(PO_4)_3$ $(0 \leq x \leq 2)$. When a compound having such a composition is used as the solid electrolyte and the oxide containing titanium is used as the electrode active material, the effects due to the configuration of the present disclosure are more sufficiently exhibited.

(Technique 4)

The electrode according to any one of Techniques 1 to 3, wherein the particles of the oxide are connected by a sintered phase of the solid electrolyte, and the sintered phase includes an amorphous phase. Due to this configuration, excellent ionic conductance is imparted to the electrode.

(Technique 5)

A battery including:

a positive electrode;
a negative electrode; and
an electrolyte layer placed between the positive electrode and the negative electrode, wherein
the positive electrode or the negative electrode includes the electrode according to any one of Techniques 1 to 4.

By using the electrode of the present disclosure for the positive electrode or the negative electrode, the resistance of the battery can be reduced.

(Technique 6)

The battery according to Technique 5, wherein the negative electrode includes the electrode. Since the oxide containing titanium is suitable as a negative electrode active material, the electrode of the present disclosure is suitable for the negative electrode.

(Technique 7)

A production method for an electrode, including

firing a molded body of a mixture of an electrode active material and a solid electrolyte, wherein
the electrode active material includes particles of an oxide containing titanium and containing no lithium, and
the particles of the oxide have a median diameter of more than 3 $\mu$m and less than 10 $\mu$m.

Due to this configuration, the sinterability of the electrode can be enhanced.

(Technique 8)

The production method for an electrode according to Technique 7, wherein the median diameter of the particles of the oxide is smaller than a median diameter of particles of the solid electrolyte. When the electrode active material and the solid electrolyte satisfy such a relationship, the sinterability of the electrode can be enhanced.

(Technique 9)

The production method for an electrode according to Technique 7 or 8, wherein the particles of the oxide have a BET specific surface area of 1 $m^2/g$ or more and 7 $m^2/g$ or less. If the BET specific surface area of the particles of the oxide is appropriately adjusted, side reactions between the particles of the oxide and the particles of the solid electrolyte during firing is suppressed. As a result, the electrode can have high ionic conductivity.

(Technique 10)

The production method for an electrode according to any one of Techniques 7 to 9, wherein the particles of the oxide include primary particles and secondary particles, and a ratio of an average particle diameter of the primary particles to the median diameter of the particles of the oxide is 0.6 or less. By using such particles of the oxide, the sinterability of the electrode can be enhanced.

(Technique 11)

A production method for a battery, including

firing a laminate including a positive electrode green sheet, an electrolyte layer green sheet, and a negative electrode green sheet, wherein
the positive electrode green sheet or the negative electrode green sheet is a molded body of a mixture including an electrode active material and a solid electrolyte,
the electrode active material includes particles of an oxide containing titanium and containing no lithium, and
the particles of the oxide have a median diameter of more than 3 $\mu$m and less than 10 $\mu$m.

Due to this configuration, a good contact interface is formed between the electrode active material and the solid electrolyte. Therefore, the sinterability of the positive electrode or the negative electrode is improved, and the resistance of the sintered-type battery can be reduced.

EXAMPLES

(Example 1)

A slurry was prepared by mixing 20 parts by mass of $TiO_2$ (anatase type), 75 parts by mass of LAGP (amorphous), 5 parts by mass of acetylene black (Li-400, manufactured by Denka Company Limited), 38.75 parts by mass of a binder solution, and 116.25 parts by mass of super-dehydrated ethanol. These materials were mixed using a rotary and revolutionary mixer ("Rentaro", manufactured by THINKY CORPORATION) at 2000 rpm for 30 minutes. The binder solution was prepared by mixing 15 parts by mass of polyvinyl butyral (BM-1, manufactured by SEKISUI CHEMICAL CO., LTD.) and 140 parts by mass of super-dehydrated ethanol. The used particles of $TiO_2$ were secondary particles.

Before the slurry was prepared, the particle size distribution of $TiO_2$, the BET specific surface area of $TiO_2$, and the particle size distribution of LAGP were measured in advance. The particle size distribution of $TiO_2$ and the particle size distribution of LAGP were measured using a laser diffraction-type particle size distribution measurement device (Mastersizer 3000, manufactured by Malvern Panalytical Ltd.). D10, D50, and D90 were calculated from the particle size distribution. The results are shown in Table 1. The median diameter of $TiO_2$ was 4.180 $\mu$m. The median diameter of LAGP was 0.888 $\mu$m. D10 is a particle diameter at which the cumulative volume is 10% in a volume-based particle size distribution. "Mastersizer" is a registered trademark of Malvern Panalytical Ltd.

The average particle diameter (Dp) of the primary particles of $TiO_2$ was calculated by the method described above, using a scanning electron microscope.

The BET specific surface area of $TiO_2$ was measured by the following method. A predetermined amount of $TiO_2$ was placed in a test tube for measurement, and the test tube for measurement was connected to a specific surface area and pore distribution measurement device (Autosorb iQ-MP, manufactured by Quantachrome Instruments). Then, a nitrogen gas adsorption test was conducted under the conditions of an adsorption temperature of 77 K and an adsorption relative pressure upper limit of 0.99 (P/P0). Using analysis software ASiQWin, analysis by the BET method was conducted in the linear region of an adsorption isotherm, and the BET specific surface area was calculated. "Autosorb" is a registered trademark of SYSMEX CORPORATION.

Next, the slurry was dried on a hot plate at a set temperature of 80°C. After confirming that the ethanol had been sufficiently removed from the slurry, the dried film was roughly pulverized and vacuum drying treatment (80°C, 2 hours) was performed. The roughly pulverized product after vacuum drying was placed in a mortar and pulverized manually for 15 minutes to obtain a raw material powder.

Next, 122 mg of the raw material powder was molded by a uniaxial pressure method using a tablet molding machine with a diameter of 10.5 mm, to obtain a molded body for an electrode. The pressurization conditions were 276 MPa and 1 minute.

Next, the molded body for an electrode was preliminarily fired to remove the binder. The conditions of the preliminary firing were 530°C (ambient temperature) for 2 hours in atmospheric air. Finally, the molded body for an electrode was normally fired to obtain an electrode of Example 1. The conditions of the normal firing were 700°C (ambient temperature) for 2 hours in a nitrogen atmosphere. The dimensions of the electrode of Example 1 were a diameter of 9.53 mm and a thickness of 0.6471 mm. The mass of the electrode was 115.0 mg.

(Example 2)

An electrode of Example 2 was produced by the same method as in Example 1, except that LAGP (amorphous) having a median diameter of 0.300 $\mu$m was used as shown in Table 1. The dimensions of the electrode of Example 2 were a diameter of 9.26 mm and a thickness of 0.6363 mm. The mass of the electrode was 111.5 mg.

(Comparative Example 1)

An electrode of Comparative Example 1 was produced by the same method as in Example 1, except that titanium oxide (anatase type) having a median diameter of 0.491 $\mu$m was used as shown in Table 1. The dimensions of the electrode of Comparative Example 1 were a diameter of 9.96 mm and a thickness of 0.6528 mm. The mass of the electrode was 114.9 mg. The used particles of the titanium oxide were secondary particles.

(Comparative Example 2)

An electrode of Comparative Example 2 was produced by the same method as in Example 1, except that titanium oxide (anatase type) having a median diameter of 1.540 $\mu$m was used as shown in Table 1. The dimensions of the electrode of Comparative Example 2 were a diameter of 9.96 mm and a thickness of 0.6380 mm. The mass of the electrode was 114.4 mg. The used particles of the titanium oxide were secondary particles.

(Comparative Example 3)

An electrode of Comparative Example 3 was produced by the same method as in Example 1, except that titanium oxide (anatase type) having a median diameter of 1.540 $\mu$m was used, and LAGP (amorphous) having a median diameter of 0.300 $\mu$m was used, as shown in Table 1. The dimensions of the electrode of Comparative Example 3 were a diameter of 9.80 mm and a thickness of 0.6457 mm. The mass of the electrode was 112.6 mg. The used particles of the titanium oxide were secondary particles.

(Comparative Example 4)

An electrode of Comparative Example 4 was produced by the same method as in Example 1, except that titanium oxide (anatase type) having a median diameter of 0.675 $\mu$m was used as shown in Table 1. The dimensions of the electrode of Comparative Example 4 were a diameter of 9.91 mm and a thickness of 0.6410 $\mu$m. The mass of the electrode was 114.6 mg. The used particles of the titanium oxide were secondary particles.

[Table 1]

| | | $TiO_2$ | | | | | | LAGP | D50 of $TiO_2$/ D50 of LAGP |
|---|---|---|---|---|---|---|---|---|---|
| | | D10 ($\mu$m) | D50 ($\mu$m) | D90 ($\mu$m) | BET ($m^2$/g) | Dp ($\mu$m) | Dp/050 | D50 by image analysis ($\mu$m) | D50 ($\mu$m) | |
| | Ex. 1 | 0.892 | 4.180 | 9.680 | 5.171 | 0.4 | 0.096 | 3.5 | 0.888 | 4.71 |
| | Ex. 2 | 0.892 | 4.180 | 9.680 | 5.171 | 0.4 | 0.096 | 3.6 | 0.300 | 13.9 |
| | Comp. Ex. 1 | 0.203 | 0.491 | 1.000 | 10.057 | 0.2 | 0.407 | - | 0.888 | 0.55 |
| | Comp. Ex. 2 | 0.430 | 1.540 | 21.300 | 9.166 | 0.25 | 0.162 | - | 0.888 | 1.73 |

(continued)

| | TiO$_2$ | | | | | | | LAGP | D50 of TiO$_2$/ D50 of LAGP |
|---|---|---|---|---|---|---|---|---|---|
| | D10 ($\mu$m) | D50 ($\mu$m) | D90 ($\mu$m) | BET (m$^2$/g) | Dp ($\mu$m) | Dp/050 | D50 by image analysis ($\mu$m) | D50 ($\mu$m) | |
| Comp. Ex. 3 | 0.430 | 1.540 | 21.300 | 9.166 | 0.25 | 0.162 | - | 0.300 | 5.13 |
| Comp. Ex. 4 | 0.211 | 0.675 | 5.610 | 11.205 | 0.15 | 0.222 | - | 0.888 | 0.76 |

[Measurement of density]

The density of each electrode was calculated from the dimensions and the mass of the electrode. The results are shown in Table 2.

[Measurement of porosity]

The true density of each material used for producing each electrode was measured in advance. The porosity of the electrode was calculated using the dimensions of the electrode, the measured value of the true density, and the content ratio of each material. The electrode was assumed to include only TiO$_2$, LAGP, and a conductive agent. The true density was measured by a He displacement method using a pycnometer (Ultrapyc 5000, manufactured by Anton Paar). For LAGP, while an amorphous material is used as a starting raw material, it is difficult to evaluate the density after sintering. Therefore, the theoretical density was used as the true density of LAGP. The results are shown in Table 2.

[Measurement of ionic conductivity]

The electrical conductivity of each electrode was measured by the following method. First, the electrode was placed in a vacuum dryer and dried at 80°C for 1 hour. Next, a Li metal foil, a solid polymer electrolyte membrane, the electrode, a solid polymer electrolyte membrane, and a Li metal foil were stacked in this order, and were placed in a sealed two-electrode cell (manufactured by Hohsen Corp.). The used solid polymer electrolyte membrane was a LiTFSI-PEO membrane. The weight average molecular weight Mw of PEO contained in the LiTFSI-PEO membrane was 600000. The ratio between PEO and LiTFSI in the LiTFSI-PEO membrane was PEO:LiTFSI = 18:1 by molar ratio. Then, chronoamperometry measurement was performed at measurement voltages of 0.1 V, 0.25 V, 0.5 V, and 0.75 V. As a current value, a value 70 seconds after the voltage was applied was used. The ambient temperature during measurement was 60°C. A resistance value was calculated from the relationship between the voltage and the current. The ionic conductivity was calculated using the dimensions of the electrode. The results are shown in Table 2.

[Measurement of electrical conductivity]

The electrical conductivity of each electrode was measured by the following method. First, the electrode was placed in a vacuum dryer and dried at 80°C for 1 hour. Next, an Au thin film having a thickness of 290 nm was formed on each of both sides of the electrode by sputtering. The electrode was placed in a sealed two-electrode cell (manufactured by Hohsen Corp.). Then, chronoamperometry measurement was performed at measurement voltages of 0.1 V, 0.25 V, 0.5 V, and 0.75 V. As a current value, a value 70 seconds after the voltage was applied was used. The ambient temperature during measurement was 25°C. A resistance value was calculated from the relationship between the voltage and the current. The electrical conductivity was calculated using the dimensions of the electrode. The results are shown in Table 2.

[Measurement of interface side reaction amount]

The interface side reaction amount of each electrode was measured by the following method. First, the electrode was placed in a vacuum dryer and dried at 80°C for 1 hour. Next, an Au thin film having a thickness of 290 nm was formed on one side of the electrode by sputtering. Next, the Au thin film, the electrode, a solid polymer electrolyte membrane, and a Li metal foil were stacked in this order, and were placed in a sealed two-electrode cell (manufactured by Hohsen Corp.) to obtain a half cell. The used solid polymer electrolyte membrane was a LiTFSI-PEO membrane. Next, a charge-discharge test was conducted for the half cell in a constant current constant voltage (CCCV) mode at 60°C, and a charge/discharge curve for the first cycle was obtained. The half cell was discharged at a constant current of 0.01 C until the voltage reached 1.5 V, and then discharged at a constant voltage of 1.5 V for 5 hours. The half cell was charged at a constant current of 0.01 C until the voltage reached 3 V, and then charged at a constant voltage of 3 V for 5 hours.

FIG. 5 is a graph showing the charge/discharge curve of a half cell in which the electrode of Example 1 was used. The vertical axis indicates the potential (unit: V) relative to the dissolution deposition potential of lithium metal. The horizontal axis indicates the ratio (%) of the capacity at each point on the graph when the discharge capacity of the first cycle is considered to be 100. As shown in FIG. 5, $TiO_2$ has a plateau region at a potential lower than 2 V. Therefore, the driving potential region of $TiO_2$ is less than 2 V. Furthermore, of the redox capacity observed in the potential region of 2 V (vs. Li/Li$^+$) or more, the capacity value during discharge is defined as an "interface side reaction amount Ci".

The redox capacity observed outside the driving potential region of $TiO_2$ reflects charge and discharge derived from a diffusion layer (reaction layer) formed when Ti contained in $TiO_2$ diffuses into LAGP during sintering. A small interface side reaction amount means that side reactions between LAGP and $TiO_2$ during sintering are suppressed, and also means that formation of a reaction layer due to side reactions is suppressed. If formation of a reaction layer due to side reactions is suppressed, the resistance of the electrode is reduced, so that such suppression is desirable.

[Calculation of interface side reaction amount]

An interface side reaction amount Ci in the charge/discharge curve of each of half cells in which the respective electrodes of Example 1, Comparative Example 1, Comparative Example 2, and Comparative Example 4 were used, was examined. The ratio of the interface side reaction amount between LAGP and $TiO_2$ due to sintering was calculated using the following calculation formula. That is, the "ratio of interface side reaction amount" shown in Table 1 is a value relative to the value of Comparative Example 4.

(Ratio of interface side reaction amount) = 100 × A/B (%)

A: Interface side reaction amount Ci (mAh) of the half cell in which each electrode was used.
B: Interface side reaction amount Ci (mAh) of the half cell in which the electrode of Comparative Example 4 was used.

[Table 2]

| | Density (g/cm³) | Porosity (%) | Electrical conductivity (S/cm) | Ionic conductivity (S/cm) | Ratio of interface side reaction amount (%) |
|---|---|---|---|---|---|
| Ex. 1 | 2.49 | 26.86 | 0.010 | $4.912\times10^{-5}$ | 53.5 |
| Ex. 2 | 2.60 | 24.82 | 0.0020 | $4.489\times10^{-5}$ | - |
| Comp. Ex. 1 | 2.26 | 34.14 | $3.35\times10^{-6}$ | $3.443\times10^{-5}$ | 94.5 |
| Comp. Ex. 2 | 2.30 | 33.01 | $7.87\times10^{-8}$ | $3.033\times10^{-5}$ | 93.0 |
| Comp. Ex. 3 | 2.31 | 32.71 | $5.09\times10^{-8}$ | $9.140\times10^{-6}$ | - |
| Comp. Ex. 4 | 2.32 | 32.89 | $2.07\times10^{-8}$ | $2.379\times10^{-5}$ | 100 |
| * The ratio of the interface side reaction amount is a value relative to Comparative Example 4. | | | | | |

As shown in Table 2, the porosities of the electrodes of Examples 1 and 2 were 26.86% and 24.82%, respectively, and were significantly lower than the porosities of the electrodes of Comparative Examples 1 to 4.

As shown in Table 2, the electrodes of Examples 1 and 2 exhibited high electrical conductivity significantly higher than the electrical conductivity of the electrodes of Comparative Examples 1 to 4. At the same time, the ionic conductivity of the electrodes of Examples 1 and 2 was higher than the ionic conductivity of the electrodes of Comparative Examples 1 to 4. This result is inferred to have been brought about by the low porosities of the electrodes of the Examples and the characteristic structures of the electrodes of the Examples.

The influence of the characteristic structure of the electrode of each Example was also clearly seen in the interface side reaction amount. That is, the interface side reaction amount of Example 1 was about 50% of the interface side reaction amount of Comparative Example 4.

As shown above, by appropriately adjusting the size of the particles of the oxide containing titanium, the size of the particles of the solid electrolyte, and the relationship therebetween, the electrical characteristics of the electrode were significantly improved.

FIG. 6 is a graph showing the particle size distribution of the particles of $TiO_2$ used in each of the Examples and the Comparative Examples. The horizontal axis indicates the particle diameter on a logarithmic scale. The vertical axis indicates the ratio of the total volume of the particles with the particle diameter indicated on the horizontal axis to the volume of all the particles. As shown in FIG. 6, the particles of $TiO_2$ used in each of Examples 1 and 2 had a bimodal particle size distribution, that is, two peaks. A first peak existed in the range of 0.5 $\mu$m or more and 2.5 $\mu$m or less, and a second peak existed in the range of 3 $\mu$m or more and 9 $\mu$m or less. The second peak was larger than the first peak.

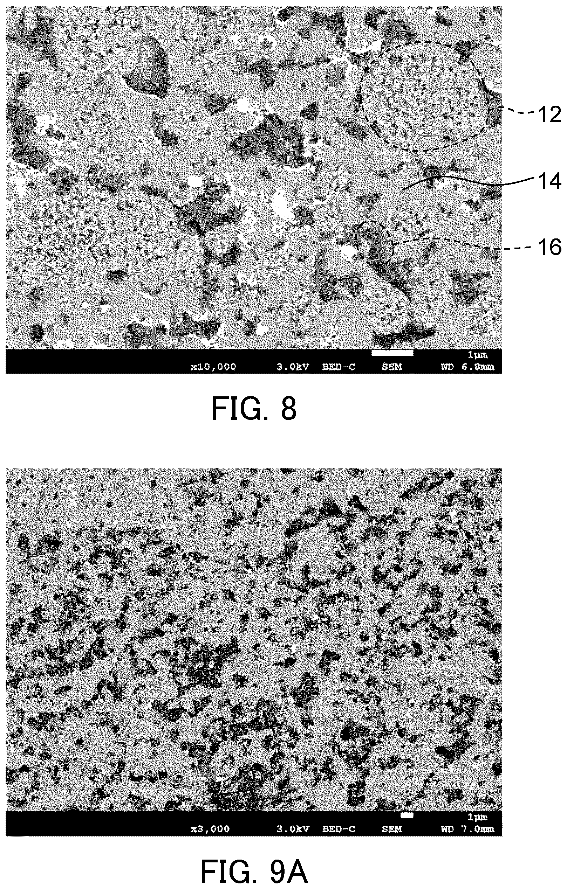

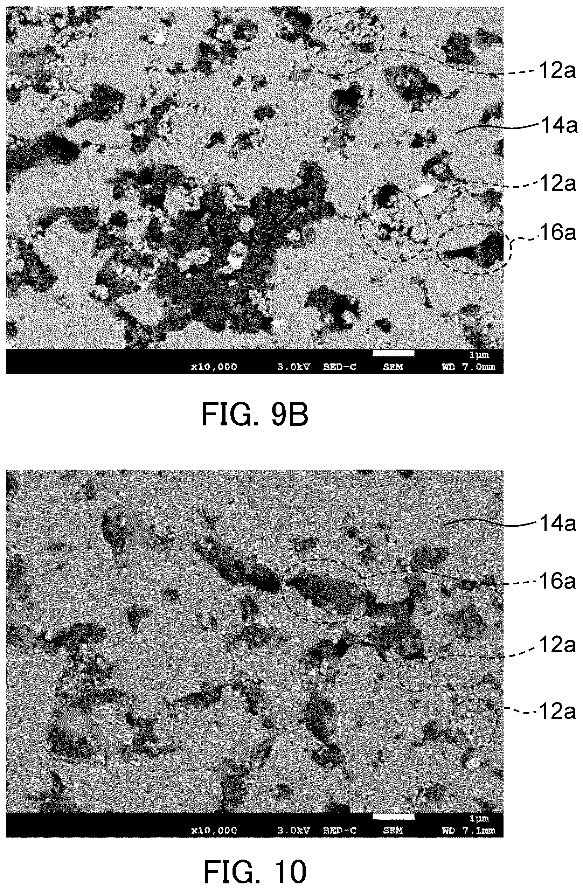

The particles of $TiO_2$ used in each Comparative Example also exhibited a bimodal particle size distribution and included relatively large particles. However, the porosity of the electrode of each Comparative Example was low. It is inferred that the large particles included in the particles of $TiO_2$ of each Comparative Example were merely particles in which primary particles were weakly aggregated, and were separated into nano-order primary particles in steps such as slurry preparation and pulverization of the coating film. This is supported by the fact that there are no large particles of $TiO_2$ in SEM images in FIG. 9A, FIG. 9B, and FIG. 10.

[Observation of cross-section]

Cross-sections of the electrodes of the Examples and the Comparative Examples were formed by broad ion beam processing in an atmosphere-free environment. Each cross-section was parallel to the thickness direction of the electrode. Next, the cross-sections of the electrodes of the Examples and the Comparative Examples were observed using a scanning electron microscope (JSM-7900F, manufactured by JEOL Ltd.). The acceleration voltage was 3 kV, and the observation magnification was 3000 times or 10000 times.

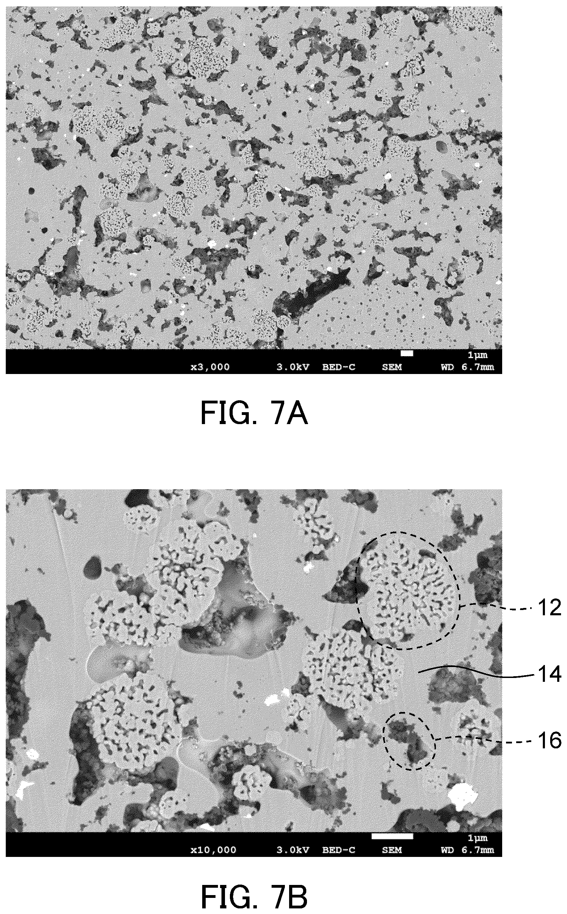

FIG. 7A and FIG. 7B are each an SEM image (3000 times or 10000 times) of the cross-section of the electrode of Example 1. FIG. 8 is an SEM image (10000 times) of the cross-section of the electrode of Example 2. FIG. 9A and FIG. 9B are each an SEM image (3000 times or 10000 times) of the cross-section of the electrode of Comparative Example 2. FIG. 10 is an SEM image (10000 times) of the cross-section of the electrode of Comparative Example 4.

As shown in FIG. 7A and FIG. 7B, in the electrode of Example 1, an electrode active material 12 ($TiO_2$) maintained a state of particles having a large diameter. Each large-diameter particle of the electrode active material 12 was a secondary particle having a plurality of voids therein. A grain boundary having a length in the micrometer order was formed along the sintered phase of a solid electrolyte 14 (LAGP) and the outer edge of the particle of the electrode active material 12. No grain boundaries between the particles of the solid electrolyte 14 were observed due to the progress of sintering. A conductive agent 16 was uniformly dispersed in the entire electrode.

The median diameter (D50) of the electrode active material 12 was calculated by the method described above, using the SEM image (magnification: 3000 times) of the cross-section of the electrode of Example 1. As a result, in the electrode of Example 1, the median diameter of the electrode active material 12 was 3.5 $\mu$m. Secondary particles each having a plurality of voids were regarded as the electrode active material 12.

As shown in FIG. 8, the electrode of Example 2 in which a solid electrolyte having a median diameter of 0.300 $\mu$m was used also had the same structure as the electrode of Example 1 shown in FIG. 7A and FIG. 7B.

The median diameter of the electrode active material 12 was calculated using the SEM image (magnification: 3000 times) of the cross-section of the electrode of Example 2. As a result, in the electrode of Example 2, the median diameter of the electrode active material 12 was 3.6 $\mu$m.

As shown in FIG. 9A, FIG. 9B, and FIG. 10, in each of the electrodes of Comparative Example 2 and Comparative Example 4, the particles of an electrode active material 12a were still dispersed in a nano-order size. Among the particles of the electrode active material 12a, some particles were completely surrounded by the sintered phase of a solid electrolyte 14a, while many particles faced the voids of the electrode and were not in sufficient contact with the solid electrolyte 14a. A conductive agent 16a was uniformly dispersed in the entire electrode.

In each of the electrodes of Comparative Example 2 and Comparative Example 4, the median diameter of the electrode active material 12a was clearly in the nanometer order. Therefore, the measurement of the median diameter was omitted.

As shown in FIG. 7A, FIG. 7B, and FIG. 8, in each of the electrodes of Example 1 and Example 2, particles of the oxide ($TiO_2$) having a maximum Feret diameter larger than 5 $\mu$m appeared in the SEM image of the cross-section. Specifically, particles of the oxide ($TiO_2$) having a maximum Feret diameter of about 7 $\mu$m appeared in the SEM image of the cross-section. This also applies to Example 3 described later. As shown in FIG. 9A, FIG. 9B, and FIG. 10, no oxide having such a large particle diameter was observed in the cross-sections of the electrodes of the Comparative Examples. The "maximum Feret diameter" is the maximum length of a perpendicular line formed by sandwiching the particle between two parallel lines.

(Example 3)

An electrode of Example 3 was produced by the same method as in Example 1, except that $TiNb_2O_7$ (D50 $\leq$ 5 $\mu$m)

was used instead of titanium oxide. The dimensions of the electrode of Example 3 were a diameter of 9.44 mm and a thickness of 0.6497 mm, and the mass of the electrode was 115.1 mg.

The density, the porosity, the electrical conductivity, and the ionic conductivity of the electrode of Example 3 were measured by the methods described above. The results are shown in Table 3.

[Table 3]

| | Density (g/cm$^3$) | Porosity (%) | Electrical conductivity (S/cm) | Ionic conductivity (S/cm) |
|---|---|---|---|---|
| Example 3 | 2.54 | 26.7 | 0.015 | $5.72 \times 10^{-5}$ |

As shown in Table 3, the porosity of the electrode of Example 3 was 26.7%. As with the electrodes of Examples 1 and 2, the porosity of the electrode of Example 3 was also sufficiently low.

As with the electrodes of Examples 1 and 2, the electrode of Example 3 also exhibited good electrical conductivity and ionic conductivity.

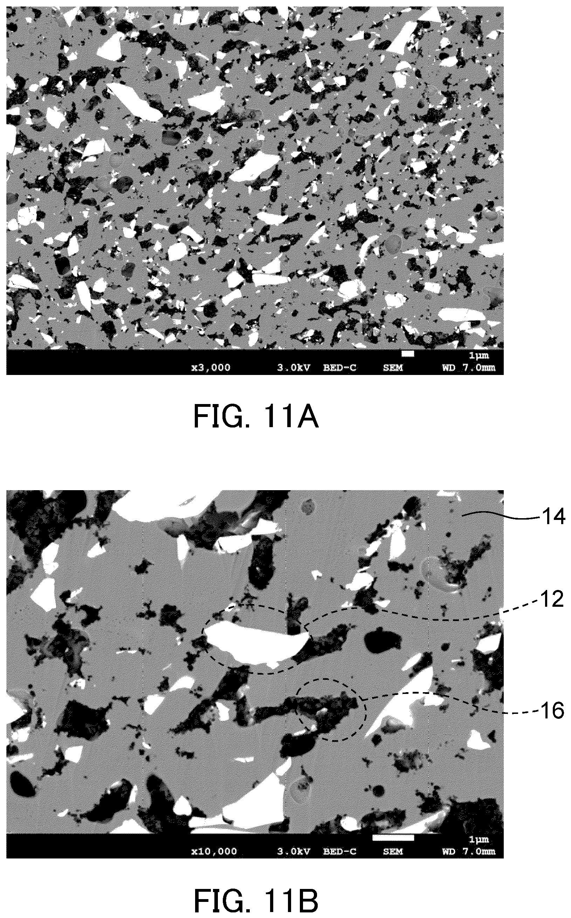

A cross-section of the electrode of Example 3 was observed using a scanning electron microscope by the method described above. FIG. 11A and FIG. 11B are each an SEM image (3000 times or 10000 times) of the cross-section of the electrode of Example 3. The electrode of Example 3 also had the same structure as the electrodes of Example 1 and Example 2 (FIG. 7A, FIG. 7B, and FIG. 8).

The median diameter of the electrode active material 12 was calculated using SEM images of the electrode of Example 3 in a plurality of observation visual fields. As a result, in the electrode of Example 3, the median diameter of the electrode active material 12 was 2.5 $\mu$m.

INDUSTRIAL APPLICABILITY

The electrode of the present disclosure is suitable as an electrode of a solid-state battery.

**Claims**

1. An electrode comprising:

   an electrode active material; and
   a solid electrolyte in contact with the electrode active material, wherein
   the electrode active material comprises an oxide containing titanium and containing no lithium, and
   the oxide exists in a state of particles having a median diameter of more than 2 $\mu$m and less than 7 $\mu$m.

2. The electrode according to claim 1, wherein the oxide comprises at least one selected from the group consisting of titanium oxide and a composite oxide containing titanium and niobium.

3. The electrode according to claim 1, wherein the solid electrolyte has a composition of $Li_{1+x}Al_xGe_{2-x}(PO_4)_3$ ($0 \leq x \leq 2$).

4. The electrode according to claim 1, wherein

   the particles of the oxide are connected by a sintered phase of the solid electrolyte, and
   the sintered phase comprises an amorphous phase.

5. A battery comprising:

   a positive electrode;
   a negative electrode; and
   an electrolyte layer placed between the positive electrode and the negative electrode, wherein
   the positive electrode or the negative electrode comprises the electrode according to claim 1.

6. The battery according to claim 5, wherein the negative electrode comprises the electrode.

7. A production method for an electrode, comprising

firing a molded body of a mixture of an electrode active material and a solid electrolyte, wherein
the electrode active material comprises particles of an oxide containing titanium and containing no lithium, and
the particles of the oxide have a median diameter of more than 3 $\mu$m and less than 10 $\mu$m.

8. The production method for an electrode according to claim 7, wherein a ratio of the median diameter of the particles of the oxide to a median diameter of particles of the solid electrolyte is 2 or more and 30 or less.

9. The production method for an electrode according to claim 7, wherein the particles of the oxide have a BET specific surface area of 1 $m^2$/g or more and 7 $m^2$/g or less.

10. The production method for an electrode according to claim 7, wherein

the particles of the oxide comprise primary particles and secondary particles, and
a ratio of an average particle diameter of the primary particles to the median diameter of the particles of the oxide is 0.6 or less.

11. A production method for a battery, comprising

firing a laminate comprising a positive electrode green sheet, an electrolyte layer green sheet, and a negative electrode green sheet, wherein
the positive electrode green sheet or the negative electrode green sheet is a molded body of a mixture comprising an electrode active material and a solid electrolyte,
the electrode active material comprises particles of an oxide containing titanium and containing no lithium, and
the particles of the oxide have a median diameter of more than 3 $\mu$m and less than 10 $\mu$m.

FIG. 1

```
        START
          │
          ▼
    PREPARE SLURRY          ──── S1
          │
          ▼
APPLY SLURRY TO SUBSTRATE   ──── S2
  TO FORM COATING FILM
          │
          ▼
  PRELIMINARY FIRING        ──── S3
          │
          ▼
    NORMAL FIRING           ──── S4
          │
          ▼
         END
```

FIG. 2

100

30

40

20

FIG. 3

START

PREPARE SLURRIES —— ST1

PRODUCE GREEN SHEETS —— ST2

STACK GREEN SHEETS —— ST3

PRELIMINARY FIRING —— ST4

NORMAL FIRING —— ST5

END

FIG. 4

FIG. 5

FIG. 6

FIG. 7A

FIG. 7B

x10,000     3.0kV     BED-C     SEM     WD  6.8mm     1μm

FIG. 8

x3,000     3.0kV     BED-C     SEM     WD  7.0mm     1μm

FIG. 9A

FIG. 9B

FIG. 10

FIG. 11A

FIG. 11B

## INTERNATIONAL SEARCH REPORT

International application No.

**PCT/JP2023/026326**

### A. CLASSIFICATION OF SUBJECT MATTER

***H01M 4/13***(2010.01)i; ***H01M 4/139***(2010.01)i; ***H01M 4/48***(2010.01)i; ***H01M 4/62***(2006.01)i; ***H01M 10/052***(2010.01)i; ***H01M 10/0562***(2010.01)i; ***H01M 10/058***(2010.01)i

FI: H01M4/13; H01M4/139; H01M4/48; H01M4/62 Z; H01M10/052; H01M10/0562; H01M10/058

According to International Patent Classification (IPC) or to both national classification and IPC

### B. FIELDS SEARCHED

Minimum documentation searched (classification system followed by classification symbols)

H01M4/13; H01M4/139; H01M4/48; H01M4/62; H01M10/052; H01M10/0562; H01M10/058

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2021/049665 A1 (MITSUI MINING & SMELTING CO., LTD.) 18 March 2021 (2021-03-18) paragraphs [0055], [0057], [0060], [0063] | 1-2, 5 |
| A | | 3-4, 6-11 |
| A | JP 2017-157305 A (FDK CORP) 07 September 2017 (2017-09-07) | 1-11 |
| A | JP 2017-157307 A (FDK CORP) 07 September 2017 (2017-09-07) | 1-11 |
| A | JP 2022-47864 A (TOSHIBA CORP) 25 March 2022 (2022-03-25) | 1-11 |
| P, X | WO 2023/119876 A1 (TAIYO YUDEN KK) 29 June 2023 (2023-06-29) paragraphs [0035]-[0036], [0045], [0047], [0063]-[0065], [0069]-[0072], [0074], [0077], [0086], fig. 6-7 | 1-3, 5-7, 11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 September 2023** | **03 October 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

INTERNATIONAL SEARCH REPORT
Information on patent family members

International application No.

**PCT/JP2023/026326**

| Patent document cited in search report | Publication date (day/month/year) | Patent family member(s) | Publication date (day/month/year) |
|---|---|---|---|
| WO 2021/049665 A1 | 18 March 2021 | US 2022/0352500 A1 paragraphs [0114]-[0115], [0118]-[0119], [0127]-[0130], [0136]<br>EP 4030503 A1<br>CN 114365310 A<br>KR 10-2022-0048990 A | |
| JP 2017-157305 A | 07 September 2017 | (Family: none) | |
| JP 2017-157307 A | 07 September 2017 | (Family: none) | |
| JP 2022-47864 A | 25 March 2022 | (Family: none) | |
| WO 2023/119876 A1 | 29 June 2023 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013218838 A